# EUROPÄISCHE PATENTANMELDUNG

(11) **EP 4 331 943 A1**
(43) Veröffentlichungstag der Anmeldung: **06.03.2024**
(21) Anmeldenummer: 22192956.5
(22) Anmeldetag: 30.08.2022
(51) Int. Cl.: B61L 27/02, B61L 27/04, B61L 27/20

(54) **VERKEHRSNETZ UND VERFAHREN ZUM BETREIBEN VON SCHIENENFAHRZEUGEN IN EINEM VERKEHRSNETZ, BESTEHEND AUS EINER KOMBINATION VON STRECKENABSCHNITTEN MIT UND OHNE ZUGSICHERUNG**

(71) Anmelder: Siemens Mobility GmbH, 81739 München (DE)
(72) Erfinder: Scholl, Carlsson, 14513 Teltow (DE); Strub, Leo, 38100 Braunschweig (DE)
(74) Vertreter: Siemens Patent Attorneys

(57) **Zusammenfassung**

Gegenstand der Erfindung ist ein Verfahren zum Betreiben von Schienenfahrzeugen (FZ) in einem Verkehrsnetz sowohl in einem für die Schienenfahrzeuge (FZ) reservierten Betriebsbereich als auch in einem mit anderen Verkehrsteilnehmern als den Schienenfahrzeugen (FZ) geteilten Betriebsbereich (GBB). In dem reservierten Betriebsbereich (RBB) wird ein rechnergestütztes Verfahren zur Zugbeeinflussung automatisiert durchgeführt. Das Verfahren zur automatisierten Zugbeeinflussung wird rechnergestützt auch in dem geteilten Betriebsbereich (GBB) durchgeführt wird, wobei keine automatisierte Zugsicherung erfolgt, jedoch eine automatisierte Bedienung und Überwachung erfolgt. Mit auf diesem Wege modifizierten Funktionsumfang ist vorzugsweise eine kontinuierliche Zuglaufverfolgung realisiert. Ferner umfasst die Erfindung ein Verkehrsnetz zum Betreiben von Schienenfahrzeugen (FZ), ein Schienenfahrzeug (FZ) zum Betreiben in einem Verkehrsnetz sowie ein Computerprogramm und eine Bereitstellungsvorrichtung für dieses.

## Beschreibung

Die Erfindung betrifft ein Verfahren zum Betreiben von Schienenfahrzeugen in einem Verkehrsnetz. Außerdem betrifft die Erfindung ein Verkehrsnetz zum Betreiben von Schienenfahrzeugen. Weiterhin betrifft die Erfindung ein Schienenfahrzeug zum Betreiben in einem Verkehrsnetz. Zuletzt betrifft die Erfindung ein Computerprogramm sowie eine Bereitstellungsvorrichtung für dieses Computerprogramm, wobei das Computerprogramm mit Programmbefehlen zur Durchführung dieses Verfahrens ausgestattet ist.

Im Zugsicherungsbetrieb (in einem für Schienenfahrzeuge reservierten Betriebsbereich) von unterirdisch fahrenden Straßenbahnen wird beispielsweise CBTC (Communication-Based Train Control) eingesetzt. Dort wird also ein rechnergestütztes, auf bidirektionale Kommunikation gestütztes Verfahren zur zentralen Zugüberwachung und Betriebsführung mit den Teilfunktionen einer automatisierten Zugsicherung, einer automatisierten Bedienung und einer automatisierten Überwachung durchgeführt. In einem Sichtfahrbetrieb ohne automatisierte Zugsicherung (d. h. in einem mit anderen Verkehrsteilnehmern geteilten Betriebsbereich) findet i.d.R. eine punktförmige unidirektionale Kommunikation (z.B. mit IMU Koppelspulen, IMU steht für induktive Meldeübertragung) zwischen Zug und Strecke statt. Die Bereiche werden bei der Umsetzung gesondert behandelt. Daher ist für den Betreiber eine genaue Zuglaufverfolgung in mit anderen Verkehrsteilnehmern geteilten Betriebsbereichen mit Sichtfahrbetrieb nicht möglich. Auf der Leittechnikseite werden nur ausschließlich für Schienenfahrzeuge reservierte Betriebsbereiche dargestellt. Im Cockpit des Zuges gibt es ein HMI für den reservierten Betriebsbereich mit automatisierter Zugsicherung (Zugsicherungsbetrieb).

Bei Metro- und Fernbahnsystemen werden oft kontinuierliche Überwachungen genutzt, um das Überfahren von Gefahrenpunkten zu verhindern, wie z.B. bei ETCS (European Train Control System), PTC (Positive Train Control) und CBTC (Communication-Based Train Control). Eine kontinuierliche Überwachung ermöglicht eine automatisierte Zugbeeinflussung unter Anwendung eines kontinuierlichen Zuglaufbetriebs und erübrigt die Einrichtung einer Vielzahl von streckenseitigen Einrichtungen, wobei das System einer kontinuierlichen Überwachung jedoch an anderer Stelle wesentlich aufwendiger ist. Bei Straßenbahnen, die teilweise unterirdisch fahren oder längere Tunnel passieren, werden kontinuierliche Überwachungen nur dort durchgeführt, beispielsweise CBTC. Im oberirdischen Fahrbetrieb ist jedoch aufgrund der komplexeren Verkehrssituation (Verkehrsteilnehmer wie Autos, Fahrräder und Fußgänger müssen berücksichtigt werden) die Zugfahrt durch einen Fahrzeugführer (Sichtfahrbetrieb) durchzuführen. Hier wird auf streckenseitige Einrichtungen wie Koppelspulen, die in der Straße am Gleis verbaut sind und entsprechende Komponenten zur Kommunikation im Fahrzeug gesetzt, die lediglich für eine Meldeübertragung sorgen, jedoch keine sicherheitsrelevante Funktion haben.

Die genannten Komponenten des Sichtfahrbetriebs erfordern einen gewissen Bauraum. Insbesondere bei sogenannten Niederflurfahrzeugen (beispielsweise Straßenbahnen), bei denen der Raum zwischen Fahrzeugboden und Gleis beschränkt ist, treten bei der Installation der genannten Komponenten insbesondere im Unterflurbereich Platzprobleme auf. Außerdem erfordern die Komponenten einen gewissen Wartungsaufwand, um Störungen zu vermeiden. Insbesondere im Gleis verbaute Komponenten bei Straßenbahnen werden nicht nur durch die Straßenbahn überfahren, sondern auch von anderen Fahrzeugen, die die Straße benutzen. Dies bewirkt eine erhöhte mechanische Beanspruchung der Komponenten, die auch deren Störanfälligkeit erhöht.

Die Aufgabe der Erfindung besteht darin, ein Verfahren sowie ein Verkehrsnetz (enthaltend Strecken bestehend aus Schienenwegen) zum Betreiben von Schienenfahrzeugen anzugeben, welches mit einem möglichst geringen technischen und/oder finanziellen Aufwand an insbesondere am oder im Gleis verbauten Komponenten im geteilten Betriebsbereich einen möglichst großen Funktionsumfang sowohl in einem nur für Zugverkehr reservierten Betriebsbereich als auch in einem mit anderen Verkehrsteilnehmern geteilten Verkehrsbereich gewährleistet. Außerdem besteht die Aufgabe der Erfindung darin, ein Computerprogramm sowie eine Bereitstellungsvorrichtung für dieses Computerprogramm anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass ein Verfahren zur automatisierten Überwachung (oder auch Zugüberwachung) und Bedienung (oder auch Betriebsführung) rechnergestützt auch in einem mit andern Verkehrsteilnehmern geteilten Betriebsbereich (GBB) durchgeführt wird, wobei keine automatisierte Zugsicherung erfolgt. Mit anderen Worten ist vorgesehen, dass das Verfahren zur automatisierten Zugüberwachung und Betriebsführung auch in dem geteilten Betriebsbereich mit einem im Vergleich zu dem Funktionsumfang zu dem für die Schienenfahrzeuge reservierten Bereich modifizierten Funktionsumfang durchgeführt wird.

In dem reservierten Betriebsbereich kommt ein rechnergestütztes, auf bidirektionale Kommunikation gestütztes Verfahren zur zentralen automatisierten Bedienung, Überwachung und Zugsicherung zum Einsatz. Bidirektionale Kommunikation bedeutet im Zusammenhang mit dieser Erfindung, dass sowohl Daten vom Schienenfahrzeug in Richtung Streckenseite übertragen werden als auch Daten von Streckenseite in Richtung des Schienenfahrzeugs übertragen werden. Dabei werden im Schienenfahrzeug sowie Verkehrsnetz geeignete Kommunikationsvorrichtungen verwendet. Diese können nach dem CBTC-Standard (vorrangig im reservierten Betriebsbereich) ausgeführt sein oder erfindungsgemäß auch den V2X Standard (vorrangig im geteilten Betriebsbereich) nutzen.

Mit einer automatisierten Bedienung und Überwachung ist vorzugsweise eine kontinuierliche Zuglaufverfolgung realisierbar, während im geteilten Betriebsbereich zur Zugsicherung durch einen Zugführer ein Sichtfahrbetrieb durchgeführt werden kann, d.h. der Zugführer trägt die komplette Sicherheitsverantwortung. Eine kontinuierliche Zuglaufverfolgung ermöglicht auch dann eine Ortung des Zuges, wenn bei einem sukzessive vollzogenen Systemwechsel (Migration von Alttechnik auf Neutechnik) parallel noch zur Ortung vorgesehene streckenseitige Einrichtungen im Verkehrsnetz wie zum Beispiel Induktionsschleifen oder Balisen zum Einsatz kommen. Diese erfolgt zum Zweck beispielsweise einer Adaption des Fahrplans bei Auftreten von Verspätungen. Hierzu ist eine Ortung der im Verkehrsnetz fahrenden Schienenfahrzeuge in einer örtlichen oder zeitlichen Dichte notwendig, damit die Adaption des Fahrplans oder eine andere von der Ortung ausgehende Aufgabe erfüllt werden kann. Das Wort "kontinuierlich" bezieht sich hierbei auf eine Dichte von Ortungsereignissen (Ereignis einer erfolgreichen Ortung des Schienenfahrzeugs), die die betreffende Aufgabe zuverlässig ausführbar macht. Technisch gesehen kann dies zum Beispiel auch durch eine quasikontinuierliche Ortung erreicht werden, bei der eine endliche Anzahl von Ortungsereignissen auf einem bestimmten Streckenabschnitt vorliegt. Eine quasikontinuierliche Ortung soll somit in dem Begriff "kontinuierlich" inbegriffen sein.

Dass betreffende automatisierte Funktionen zur Zugsicherung im modifizierten Funktionsumfang nicht enthalten ist, bedeutet, dass diese beispielsweise manuell durchgeführt werden muss. Insbesondere erfolgt eine manuelle Durchführung seitens eines Zugführers, der für einen Sichtfahrbetrieb verantwortlich ist und somit mit der betreffenden automatisierten Funktion übereinstimmende Funktionen manuell durchführt.

Das erfindungsgemäße Verfahren bringt eine Vielzahl von Vorteilen.

Durch die Lösung werden im Sichtfahrbetrieb sowohl die Streckeneinrichtungen im Gleis als auch die korrespondierenden Fahrzeugantennen eingespart, die bei einer klassischen punktförmigen Meldeübertragungseinrichtung (z.B. IMU) zum Einsatz kommen müssten. Dies führt zu erheblichen Einsparungen und löst Probleme der Montage der erforderlichen Fahrzeugkoppelspulen im Unterflurbereich insbesondere in Niederflurstraßenbahnen. Stattdessen werden im Fahrzeug ein Lokalisierungs- und Datenübertragungssystem sowie die dafür notwendigen Kombiantennen (z.B. GPS, Mobilfunk, WLAN) installiert, um Daten zu übertragen, welche die realisierten Anwendungen betreffen. Dadurch, dass hierzu ein Datenkommunikationssystem des Fahrzeugs wie zum Beispiel V2X verwendet wird, ist die Lösung vergleichsweise kostengünstig realisierbar. Da auf einen Zugsicherungsbetrieb verzichtet wird, können beispielsweise COTS-Komponenten zum Einsatz kommen (COTS sind components of the shelf, also handelsübliche und damit leicht verfügbare und kostengünstige Komponenten). Im Verkehrsnetz können ebenfalls COTS-Komponenten zum Einsatz kommen, die aufgrund der Nutzung insbesondere einer V2X Teil-Infrastruktur schon vorhanden sein können, da diese bereits für andere Verkehrsteilnehmer des geteilten Betriebsbereiches (z.B. Teilnehmer des motorisierten Individualverkehrs) installiert wurden. Hierdurch können Installationskosten zumindest so weit eingespart werden, wie sich die bereits installierten Komponenten nutzen lassen.

An der Strecke kann ein an den modifizierten Funktionsumfang des Sichtfahrbetriebs angepasster, vorzugsweise reduzierter Umfang an Komponenten installiert werden, oder eine bereits im geteilten Betriebsbereich bereits installierte Infrastruktur wie zum Beispiel V2X genutzt werden.

Die Erfindung unterscheidet sich von bestehenden Systemen dadurch, dass keine oder zumindest weniger streckenseitige Einrichtungen im Gleis notwendig sind.

Das System bietet damit erfindungsgemäß eine einfach zu realisierende, digitale, platzsparende Funktionen, insbesondere auch für Straßenbahnsysteme, ohne aufwendige Installation von Geräten unter dem Fahrzeugboden und im Gleisbett. Die digitalen oder virtuellen Funktionen können daher bevorzugt auch bei Niederflurfahrzeugen mit begrenzten Platzverhältnissen zum Einsatz kommen (beispielsweise Straßenbahn).

Weitere Vorteile sollen im Folgenden stichpunktartig aufgeführt werden.
- Kontinuierliche Erfassung und Meldung der Fahrzeugposition zur Ermöglichung einer Zuglaufverfolgung in quasi Echtzeit.
- Bi-direktionaler Datenaustausch zwischen Strecke und Zug. Vorteilhaft wird dies durch die Übertragungstechnik, die durch das automatisierte Zugsicherungssystem im reservierten Betriebsbereich vorgegeben wird, gewährleistet.
- Bidirektionale Kommunikation, um Nachrichten (Text/Sprache) von Fahrdienstleitung an Fahrer und umgekehrt zu ermöglichen. Vorteilhaft wird dies durch die Übertragungstechnik, die durch das automatisierte Zugsicherungssystem im Zug Sicherungsbereich vorgegeben wird, gewährleistet.
- Vereinfachung und Vereinheitlichung von Schnittstellen zu Streckeninfrastruktur und auf dem Fahrzeug. Dies bedeutet, dass spätestens nach einer kompletten Ablösung bestehender, im Gleis verbauter, im allgemeinen unidirektionaler Übertragungstechniken komplett auf eine einheitliche Übertragungstechnik zurückgegriffen werden kann, welche dann sowohl im reservierten Betriebsbereich als auch im geteilten Betriebsbereich zum Einsatz kommt.
- Gerade bei Verkehrsnetzen, die sowohl über Sichtfahr- als auch reservierte Betriebsbereiche verfügen, wird eine ganzheitliche Integration der unterschiedlichen Bereiche in ein gemeinsames Verkehrsmanagementsystem erreicht, sodass eine gesamtheitliche Sichtbarkeit und (wenn auch im geteilten Betriebsbereich eingeschränkte) Beinflussungsmöglichkeit der Züge im gesamten Verkehrsnetz (d. h. in geteilten Betriebsbereichen genauso wie in reservierten Betriebsbereichen) besteht.
- Der Möglichkeit der Einbindung beispielsweise einer Straßenbahn in ein gesamtheitliches, standardisiertes Verkehrsmanagementsystems einer Stadt/Kommune/Ballungsraum wird möglich. Dies kann über den schienengebundenen Verkehr hinaus gehen und auch Systeme des Straßenverkehrs, bspw. Lichtsignalanlagen oder Omnibuslinien, umfassen.
- Die Nutzung einer vollständigen Infrastrukturausrüstung des automatisierten Zugbeeinflussungssystems im geteilten Betriebsbereich wäre nicht wirtschaftlich und nicht nötig. Ein Betreiber möchte eine bedarfsgerechte, investitionsoptimierte Ausrüstung des Streckennetzes je nach Anforderungsprofil (Zugsicherungsbetrieb vs. Sichtfahrbetrieb). Hier setzt die erfindungsgemäße Lehre an, wonach für den Sichtbereich ein modifizierter Funktionsumfang zur Verfügung gestellt wird. Dieser ist vorzugsweise um sicherheitsrelevante Funktionen reduziert, die im Sichtfahrbetrieb durch einen Zugführer übernommen werden müssen. Deswegen kann auch eine im Funktionsumfang reduzierte Infrastruktur im Sichtfahrbetrieb installiert werden. Beispielsweise können Sensoren weggelassen werden, die für einen automatisierten Fahrbetrieb erforderlich wären.
- Möglichst wenig Hardware im Gleis, um Wartungs- und Instandhaltungsaufwände zu reduzieren und gleichzeitig eine höhere Flexibilität bei Änderungen oder Erweiterungen zu gewährleisten. Dies wird vorteilhaft durch eine Installation einer Infrastruktur für den modifizierten Funktionsumfang gewährleistet, wobei die Infrastruktur im reservierten Betriebsbereich vollständig installiert ist.
- Der Ablösung/Migration alter Meldeübertragungstechnik, da eine baldige Obsoleszenz der bestehenden Systeme absehbar ist. Hier kann die Installation einer Infrastruktur für die automatisierte Zugbeeinflussung Synergie-Effekte erzeugen, wobei die Infrastruktur idealerweise mit standardisierter und zukunftsfähiger Technik einen Investitionsschutz bietet. Dies gilt ebenfalls für die eingesetzte Hardware. Diese sollte ebenfalls möglichst auf standardisierten Komponenten basieren.
- Ein weiterer Vorteil ist die Ausbaufähigkeit. Beispielsweise ist es möglich, den automatisierten Zugbetrieb (Zugsicherungsbetrieb) sukzessive auch auf den geteilten Betriebsbereich zu übertragen, wenn die Technologie hierfür ausgereift genug ist. In diesem Fall müssen nur noch die Komponenten der Infrastruktur für den automatisierten Zugbetrieb installiert werden, wobei eine Nachrüstung in einem solchen Fall kostengünstiger ist, als es eine Erstausrüstung wäre. Perspektivisch können beispielsweise fahrerlose Straßenbahnen dann sowohl in den reservierten Betriebsbereichen als auch in den geteilten Betriebsbereichen zum Einsatz kommen.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise über Schnittstellen auch zu einem Netzwerk zusammengeschlossen sein können.

Unter einem "Prozessor" kann im Zusammenhang mit der Erfindung beispielsweise ein Wandler, ein Sensor zur Erzeugung von Messsignalen oder eine elektronische Schaltung verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Programmmodule" sollen einzelne Funktionseinheiten verstanden werden, die einen erfindungsgemäßen Programmablauf von Verfahrensschritten ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Als modifizierter Funktionsumfang soll vorzugsweise ein Funktionsumfang verstanden werden der nur Funktionen enthält, die für den Betrieb des Schienenfahrzeugs als nicht sicherheitsrelevant (keine automatisierte Zugsicherung, jedoch eine automatisierte Bedienung und Überwachung) eingestuft sind. Gemäß der internationalen Norm IEC 61508 beziehungsweise spezifisch für den Bahnbereich gemäß der europäischen Norm EN 50129 werden für Sicherheitsfunktionen (Safety) vier Sicherheits-Integritätslevel oder Englisch Safety Integrity Level (SIL-1 bis SIL-4) beziehungsweise Sicherheits-Anforderungsstufen unterschieden. Hierbei stellt der Sicherheits-Integritätslevel 4 die höchste und der Sicherheits-Integritätslevel 1 die niedrigste Stufe der Sicherheits-Integrität dar. Der jeweilige Sicherheits-Integritätslevel beeinflusst das Vertrauensintervall eines Messwertes dahingehend, dass das Vertrauensintervall umso kleiner ist, je höher der Sicherheits-Integritätslevel ist, der seitens der jeweiligen Vorrichtung zu erfüllen ist. Damit ergeben sich Einschränkungen aufgrund vergleichsweise ungenauer Messwerte und des damit verbundenen vergleichsweise großen Vertrauensintervalls insbesondere für solche Systeme, welche die höheren Sicherheits-Integritätslevel SIL-4 oder SIL-3 erfüllen. Die Dimension der Sicherheit der verschiedenen Sicherheits-Integritätslevel lässt sich anschaulich mit der zu erwartenden Häufigkeit eines Ausfalls des Sicherheitsrelevanten Systems, auch MTBF (Mean Time Between Failures) genannt, beschreiben. Diese liegt bei SIL-1 im Bereich von 10 ... 100 a, bei SIL-2 im Bereich von 100 ... 1000 a, bei SIL-3 im Bereich von 1000 ... 10000 a, und bei SIL-4 im Bereich von 10000 ... 100000 a.

Wenn durch den modifizierten Funktionsumfang nur Funktionen umfasst sind, die nicht sicherheitsrelevant sind, hat das den Vorteil, dass die den Sichtfahrbetrieb begleitende Hardwareinfrastruktur an der Strecke selbst auch nicht die Anforderungen an eine erhöhte Sicherheit erfüllen müssen. Hierbei wird erfindungsgemäß die Erkenntnis genutzt, dass im Sichtfahrbetrieb für sicherheitsrelevante Funktionen der Zugführer verantwortlich ist, sodass die automatisiert umgesetzten Funktionen selbst die Sicherheit des Betriebs des Schienenfahrzeug nicht gefährden.

Als Beispiel kann die kontinuierliche Ortung des Schienenfahrzeugs im geteilten Betriebsbereich genannt werden. Diese wird nicht für sicherheitsrelevante Funktionalitäten des Bahnbetrieb verwendet. Der Fahrzeugführer wird mit anderen Worten unabhängig von der ermittelten Position aufgrund von eigenen Urteilen Fahrentscheidungen für das im Sichtfahrbetrieb befindliche Fahrzeug treffen. Die Ortung kann aber für nicht sicherheitsrelevante Anwendungen (sog. Komfortfunktionen) wie zum Beispiel einen adaptiven Fahrplan genutzt werden. Sollte bei einer solchen Funktion die durch Ortung ermittelte Position nicht mit der tatsächlichen Position übereinstimmen, beeinflusst dies nämlich nicht die Sicherheit des Schienenfahrzeugs als solchen sondern würde nur zu einem eventuell unzureichend optimierten Fahrplan führen. Die daraus resultierenden Verspätungen würden allerdings kein Sicherheitsrisiko für die Nutzer des Schienenfahrzeugs darstellen.

Gemäß einer Ausgestaltung der Erfindung ist vorgesehen, dass die automatisierte Bedienung und Überwachung einheitlich mindestens eine der folgenden Funktionen verwirklicht: Ermittlung und Übertragung von Ankunftsinformationen der Schienenfahrzeuge, Betriebsführung mit einer Möglichkeit zur Optimierung des Fahrplans, kontinuierliche Zuglaufverfolgung.

Diese Funktionen sind vorstehend schon als Komfortfunktionen bezeichnet worden. Komfortfunktionen zeichnen sich dadurch aus, dass sie für einen Betrieb des Schienenfahrzeugs aus Sicht von Sicherheitserwägungen nicht erforderlich sind. Jedoch kann die Erfüllung von Komfortfunktionen die Usability des Betriebs der Schienenfahrzeuge in dem betreffenden Verkehrsnetz verbessern. Verbesserungen können in der Leistungsfähigkeit des Betriebs liegen, zum Beispiel eine engere Taktung von aufeinanderfolgenden Zügen in dem Verkehrsnetz. Oder auch in einer Verbesserung bei der Nutzung durch die Fahrgäste, zum Beispiel durch Vorhersage der tatsächlichen Ankunftszeiten eines Schienenfahrzeugs im Bahnhof. Insgesamt führen die angebotenen Komfortfunktionen zu einer größeren Akzeptanz bei den Fahrgästen und vorteilhaft dadurch auch zu einer breiteren Nutzung.

Gemäß einer Ausgestaltung der Erfindung ist vorgesehen, dass in dem geteilten Betriebsbereich Funktionskomponenten genutzt werden, die auch anderen Verkehrsteilnehmern als den Schienenfahrzeugen zur Verfügung gestellt werden. Mit anderen Worten werden Ressourcen in Form von Funktionskomponenten geteilt, und zwar zwischen den Schienenfahrzeugen und anderen Verkehrsteilnehmern. Dies wird möglich, da eine Standardtechnologie wie zum Beispiel V2X verwendet wird, die bereits einen gewissen Verbreitungsgrad im motorisierten Individualverkehr hat.

Die Teilung von Ressourcen mit anderen Verkehrsteilnehmern (die nicht Schienenfahrzeuge sind), zum Beispiel V2X-Resourcen, macht die gemäß dieser Ausgestaltung vorgeschlagene Lösung besonders wirtschaftlich. Mit anderen Worten kann ohne eine Investition oder zumindest mit verringerten Investitionen in die Hardwareinfrastruktur an der Strecke das erfindungsgemäße Verkehrsnetz aufgebaut werden, mit dem sich das erfindungsgemäße Verfahren durchführen lässt. Somit greift das Zugsicherungssystem im Zugsicherungsbetrieb auf eine den Sicherheitsanforderungen entsprechende Infrastruktur zu und im Sichtfahrbetrieb zur Realisierung der nicht sicherheitsrelevanten gewünschten Funktion auf eine vorzugsweise bereits bestehende andere Infrastruktur. Im Ergebnis können die Komfortfunktionen dann nahtlos sowohl im Zugsicherungsbetrieb als auch im Sichtfahrbetrieb zur Verfügung gestellt werden, was die Realisierung dieser Komfortfunktionen (unabhängig davon, ob dies automatisiert oder beispielsweise in einer Leitzentrale geschieht) vorteilhaft stark vereinfacht und ein zusätzliches Potenzial für die Verwirklichung der Komfortfunktionen im gesamten Verkehrsnetz schafft.

Erfindungsgemäß sind außerdem folgende weitere Aspekte zu berücksichtigen.
- Schnittstellen zu sämtlichen Drittsystemen ermöglichen den Aufbau eines Gesamtsystems.
- Einfache Wartbarkeit, Installation, da Infrastrukturkomponenten leicht zugänglich an der Strecke oberirdisch verbaut werden.
- Flexibilität bzw. einfache Änderbarkeit durch Software-Einstellungen an leicht zugänglichen Komponenten.
- Kommunikation mit Komponenten der Straßeninfrastruktur. Hier kann die z. T. bereits bestehende Infrastruktur von Städten (z. B. an Ampelanlagen) einfach einbezogen werden, da ein einheitlicher Kommunikationsstandard realisiert ist.
- Bidirektionale, kontinuierliche Zug-Strecke-Kommunikation
- Migrationsfähigkeit mit annähernd identischer Funktionsweise, wie die konventionelle Meldeübertragungstechnik (IMU, Infrarot, Analogfunk). Nutzung von Standards bei Hardware und Kommunikationsweg.
- Erweiterung der Komfortfunktionen (Zuglaufverfolgung, Zuglenkung und Zugregulierung) eines CBTC Systems auf geteilte Betriebsbereiche. In diesem Zuge soll eine Schnittstelle auf Betriebsleitebene entstehen, sodass Informationen aus dem geteilten Betriebsbereich (in standardisiertem Format) entsprechend verarbeitet werden können und eine einheitliche Anzeige im geteilten- und reservierten Betriebsbereich realisiert werden kann. Ziel ist eine Integration in die zentrale Planung, Abfertigung, Zugregulierung und Fahrplanmanagement.
- Auch fahrzeugseitig soll eine Integration der Komfortfunktionen in das zugseitige Fahrzeug HMI (Human Machine Interface), das aktuell nur im Zugsicherungsbetrieb (vorzugsweise CBTC) aktiv ist, vorgenommen werden.

Gemäß einer Ausgestaltung der Erfindung ist vorgesehen, dass das Verfahren zur automatisierten Zugbeeinflussung auf CBTC beruht.

Als Communication-Based Train Control (CBTC) werden Systeme zur automatisierten Zugbeeinflussung und zur Sicherung von Zugfahrten bezeichnet, bei denen eine in beide Richtungen arbeitende Datenkommunikation zwischen Fahrzeug und Streckenausrüstung stattfindet, sowie eine präzise Gleisfreimeldung unabhängig von einer Streckenausrüstung wie Gleisstromkreisen genutzt wird, wodurch ein Fahren im wandernden Raumabstand (dem Moving Block) ermöglicht wird. Die Grundfunktion des Systems kann um Türsteuerung oder Fahrgastinformationen erweitert werden. Die Anforderungen und die allgemeine Systemarchitektur von CBTC-Systemen sind beispielsweise im IEEE-Standard 1474.1 definiert.

Die genannte Aufgabe wird alternativ mit dem eingangs angegebenen Anspruchsgegenstand (Verkehrsnetz) erfindungsgemäß auch dadurch gelöst, dass ein Verfahren zur automatisierten Zugüberwachung und Betriebsführung rechnergestützt auch in dem geteilten Betriebsbereich (GBB) durchführbar ist, wobei bei der Durchführung keine automatisierte Zugsicherung erfolgt, jedoch eine automatisierte Bedienung und Überwachung erfolgt.

Die genannte Aufgabe wird alternativ mit dem eingangs angegebenen Anspruchsgegenstand (Schienenfahrzeug) erfindungsgemäß auch dadurch gelöst, dass das Verfahren zur automatisierten Zugüberwachung und Betriebsführung rechnergestützt auch in dem geteilten Betriebsbereich (GBB) durchführbar ist, wobei bei der Durchführung keine automatisierte Zugsicherung erfolgt, jedoch eine automatisierte Bedienung und Überwachung erfolgt.

Mit den genannten Vorrichtungen lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäßen Vorrichtungen.

Des Weiteren wird ein Programmmodule enthaltendes Computerprogramm mit Programmbefehlen zur Durchführung des genannten erfindungsgemäßen Verfahrens und/oder dessen Ausführungsbeispielen beansprucht, wobei mittels des Computerprogramms jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogramms beansprucht. Die Bereitstellungsvorrichtung ist beispielsweise ein Speichereinheit, die das Computerprogramm speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogramm vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogramm. Diese Bereitstellung kann beispielsweise aber auch als partieller Download erfolgen, der aus mehreren Teilen besteht. Ein solches Computerprogramm wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:
Figur 1 ein Ausführungsbeispiel der erfindungsbemäßen Vorrichtungen in Form des Verkehrsnetzes und des Schienenfahrzeugs mit ihren Wirkzusammenhängen schematisch,
Figur 2 ein Ausführungsbeispiel einer Computer-Infrastruktur der Vorrichtung gemäß Figur 1 als Blockschaltbild, wobei die einzelnen Funktionseinheiten Programmmodule ausführen, die jeweils in einem oder mehreren Prozessoren ablaufen können und wobei die Schnittstellen demgemäß softwaretechnisch oder hardwaretechnisch ausgeführt sein können.

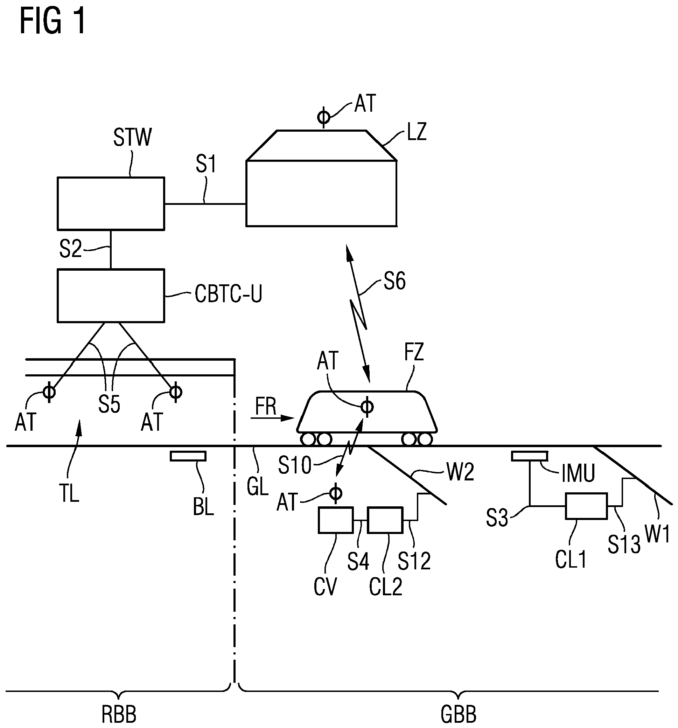

Gemäß Figur 1 ist schematisch ein Verkehrsnetz dargestellt, welches exemplarisch durch ein Gleis GL der das Verkehrsnetz mitbildenden Strecke für ein Fahrzeug FZ, welches sich in einer Fahrtrichtung FR bewegt, vorgesehen ist. Die Strecke weist einen reservierten Betriebsbereich RBB auf, wo nur Schienenfahrzeuge FZ verkehren dürfen. Dies ist in einem Tunnel TL der Fall. Außerdem gibt es einen geteilten Betriebsbereich GBB, wie dies beispielsweise bei Straßenbahnen üblich ist. In diesen geteilten Betriebsbereich GBB können andere Verkehrsteilnehmer, die in Figur 1 nicht näher dargestellt sind, das Gleis GL kreuzen oder in dessen Bereich fahren (Fußgänger, Radfahrer, Kraftfahrzeuge).

Das Gleis GL kann streckenseitige Einrichtungen wie z. B. eine Balise BL und ein weiteres Streckenelement IMU, welches durch eine induktive elektrische Schleife gebildet ist, aufweisen. Das Streckenelement IMU ist in den das Gleis GL tragenden Untergrund eingebettet und nicht näher dargestellt. Weiterhin sind Stellelemente W1, W2 in Form von Weichen dargestellt. Diese bestimmen über den Weg des Schienenfahrzeugs FZ im Verkehrsnetz. Die Stellelemente W1, W2 werden durch Controller CL1, CL2 angesteuert, welche entsprechende Stellbefehle umsetzen.

Im Falle des ersten Stellelements W1 wird über das Streckenelement IMU ein Stellbefehl über eine dritte Schnittstelle S3 an den ersten Controller CL1 weitergegeben, der den Stellbefehl über eine dreizehnte Schnittstelle S13 umsetzt, um das erste Stellelement W1 zu stellen. Im Falle des zweiten Stellelements W2 wird ein Stellbefehl beispielsweise über eine zehnte Schnittstelle S10 initiiert, wobei es sich bei der zehnten Schnittstelle S10 um eine Funkschnittstelle zwischen zwei Antennen AT, jeweils im Schienenfahrzeug FZ und in einer Verarbeitungseinheit (beispielsweise einem Konverter) CV, handelt. Hierbei kann es sich z. B. um eine V2X-Schnittstelle handeln. Die Verarbeitungseinheit CV konvertiert das über die zehnte Schnittstelle S10 empfangene Signal und sendet es über eine vierte Schnittstelle S4 an den zweiten Controller CL2. Dabei ist das durch die Verarbeitungseinheit CV konvertierte Signal in demselben Format verfügbar wie das durch das Streckenelement IMU erzeugte und über die dritte Schnittstelle S3 dem ersten Controller CL1 übermittelte Signal. Deswegen kann der zweite Controller CL2 über eine zwölfte Schnittstelle S12 einen Stellbefehl an das zweite Stellelement W2 geben.

Figur 1 macht deutlich, dass das Streckenelement IMU in Abhängigkeit von einer Überfahrt des Schienenfahrzeugs FZ ein Signal über die dritte Schnittstelle S3 übermittelt. Insofern ist das Streckenelement IMU als Sensor zur Detektion zur Überfahrt von Schienenfahrzeugen FZ ausgelegt. Dieses Streckenelement kann jedoch, wie für das Stellelement W2 gezeigt ist, durch die Verarbeitungseinheit CV ersetzt werden, was eine direkte Aussendung eines Signals aus dem Schienenfahrzeug FZ über dessen Antenne AT (zehnte Schnittstelle S10) ermöglicht. Hierbei wird eine IT-Infrastruktur nach dem V3X-Standard genutzt, die im Verkehrsnetz zumindest zum Teil ohnehin vorhanden ist und die im Schienenfahrzeug kostengünstig mit COTS-Komponenten nachgerüstet werden kann.

In dem Verkehrsnetz ist durch eine Vielzahl von Antennen AT ein Netzwerk gebildet, welches eine Kommunikation ermöglicht. Hieran ist auch eine Leitzentrale LZ beteiligt, in der beispielsweise adaptive Zugpläne erstellt werden können und die bei der Abwicklung eines CBTC Verfahrens in dem reservierten Betriebsbereich RBB mitwirkt. Die Leitzentrale LZ kommuniziert zu diesem Zweck über eine erste Schnittstelle S1 mit einem Stellwerk STW, welches seinerseits über eine zweite Schnittstelle S2 mit einer CBTC-Einheit CBTC-U zur Durchführung eines CBTC Verfahrens in dem Tunnel TL kommuniziert. Bei einer Balise im Tunnel handelt es sich aber um eine sogenannte Festdatenbalise die im Rahmen der Durchführung des CBTC-Verfahrens beteiligt ist.

Das Schienenfahrzeug FZ kommuniziert über eine sechste Schnittstelle S6 mit der Leitzentrale LZ. Weitere Schnittstellen können vorgesehen sein, auch wenn dies nicht in Figur 1 dargestellt ist. Zum Beispiel kommuniziert das Schienenfahrzeug FZ über nicht dargestellte Schnittstellen mit Antennen AT im Tunnel TL, damit eine Verbindung über die Schnittstelle S5 zur CBTC-Einheit CBTC-U aufgebaut werden kann. Wichtig ist allerdings, dass der Zugsicherungsbetrieb im Tunnel TL über CBTC, und der Sichtfahrbetrieb, in dem ein nicht dargestellter Fahrzeugführer das Schienenfahrzeug FZ führt, ein Dienst mit im Vergleich zum automatisierten Zugleitbetrieb modifiziertem Funktionsumfang zum Einsatz kommt, wobei eine automatisierte Bedienung und Überwachung des Schienenfahrzeugs durchgeführt wird. Dieser Dienst bedient sich zur Kommunikation vorzugsweise des V2X-Standards.

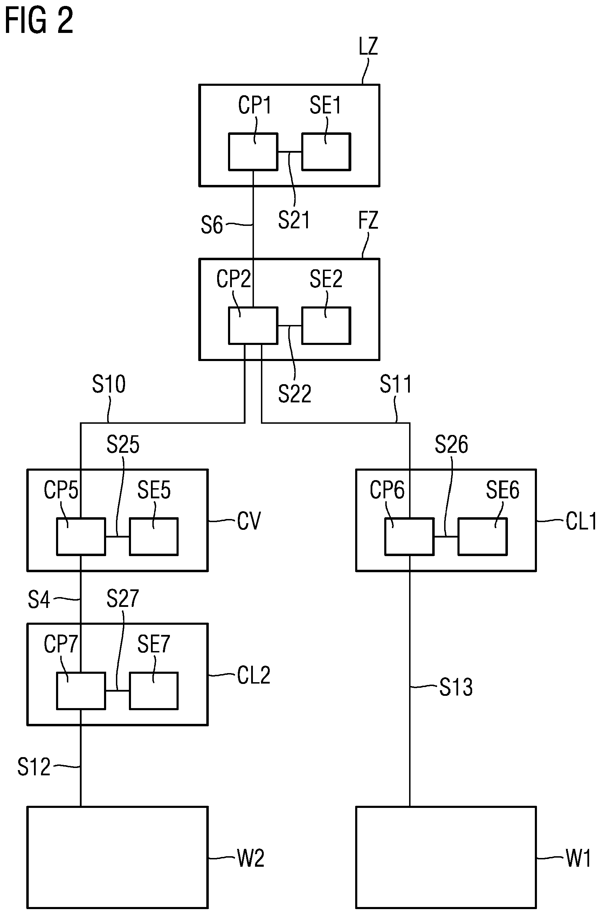

In Figur 2 ist zu erkennen, wie ein Netzwerk entsprechend der Darstellung in Figur 1 für den geteilten Betriebsbereich (GBB) aufgebaut sein kann. Die Leitzentrale LZ weist einen ersten Computer CP1 mit einer ersten Speichereinheit SE1 auf, die über eine einundzwanzigste Schnittstelle S21 mit dem ersten Computer CP1 verbunden ist. Mit einem Computer CP2 im Schienenfahrzeug FZ kommuniziert der Computer CP1 der Leitzentrale LZ über die sechste Schnittstelle S6. Einzelheiten zur Übertragungstechnik sind in Figur 2 nicht dargestellt. Das Schienenfahrzeug FZ weist zum Zwecke der Kommunikation den zweiten Computer CP2 auf, der über eine zweiundzwanzigste Schnittstelle S22 mit einer zweiten Speichereinheit SE2 verbunden ist. Über die zehnte Schnittstelle S10 kommuniziert der zweite Computer CP2 mit einem fünften Computer CP5 in der Verarbeitungseinheit CV, die ebenfalls eine fünfte Speichereinheit SE5 aufweist, die mit dem fünften Computer CP5 über eine fünfundzwanzigste Schnittstelle S25 verbunden ist. Der fünfte Computer CP5 kommuniziert über die vierte Schnittstelle S4 mit einem siebten Computer CP7 des zweiten Controllers CL2, wobei der siebte Computer CP7 über eine siebenundzwanzigste Schnittstelle S27 mit einer siebten Speichereinheit SE7 verbunden ist. Der zweite Controller CL2 kann mit dem siebenten Computer CP7 über die zwölfte Schnittstelle S12 das zweite Stellelement W2 ansteuern.

Über die elfte Schnittstelle S11 findet auch eine Kommunikation des Schienenfahrzeugs FZ mit einem sechsten Computer CP6 des ersten Controllers CL1 statt. Diese besteht in einer Überfahrt über das Streckenelement IMU, wobei dabei induktiv ein Signal ausgelöst wird. Auch der erste Controller CL1 weist eine sechste Speichereinheit SE6 auf, die über eine sechsundzwanzigste Schnittstelle S26 mit dem sechsten Computer CP6 verbunden ist. Der sechste Computer CP6 kann seinerseits über die dreizehnte Schnittstelle S13 das erste Stellelement W1 ansteuern.

### Bezugszeichenliste

- LZ: Leitzentrale
- FZ: Fahrzeug
- FR: Fahrtrichtung
- GL: Gleis
- AT: Antenne
- STA: Streckenabschnitt
- W1 ... W2: Stellelement (Weiche)
- CL1 ... CL2: Controller (Steuerung)
- CV: Verarbeitungseinheit (Converter)
- BL: Balise
- TL: Tunnel
- RBB: reservierter Betriebsbereich
- GBB: geteilter Betriebsbereich
- IMU: Streckenelement
- STW: Stellwerk
- CBTC-U: CBTC-Einheit

- CP1 ... CP7: Computer
- SE1 ... SE7: Speichereinrichtung
- S1 ... S13: Schnittstelle

- ZSB: Zugsicherungsbetrieb
- SFB: Sichtfahrbetrieb
- SIL1...4: sicherer Betriebsmodus
- NSIL: nicht sicherer Betriebsmodus
- CBTC: Zugbeeinflussungsschritt
- TRF: Transferschritt
- INF: Informationsschritt
- INF_OT: Ausgabeschritt für Information
- STB: Steuerbefehl
- STB_OT: Ausgabeschritt für Steuerbefehl
- HMB: manueller Befehl durch Zugführer
- HMB_IN: Eingabeschritt für manuellen Befehl

## Patentansprüche

1. Verfahren zum Betreiben von Schienenfahrzeugen (FZ) in einem Verkehrsnetz
• sowohl mit einem für die Schienenfahrzeuge (FZ) reservierten Betriebsbereich (RBB)
• als auch mit einem mit anderen Verkehrsteilnehmern als den Schienenfahrzeugen (FZ) geteilten Betriebsbereich (GBB),
wobei in dem reservierten Betriebsbereich (RBB) ein rechnergestütztes, auf bidirektionale Kommunikation gestütztes Verfahren zur zentralen automatisierten Zugüberwachung und Betriebsführung zum Einsatz kommt,
**dadurch gekennzeichnet,**
**dass** das Verfahren zur zentralen automatisierten Zugüberwachung und Betriebsführung auch in dem geteilten Betriebsbereich (GBB) zum Einsatz kommt, wobei
• eine automatisierte Zugsicherung nicht erfolgt,
• jedoch eine automatisierte Bedienung und Überwachung erfolgt.

2. Verfahren nach Anspruch 1
**dadurch gekennzeichnet,**
**dass** mit der automatisierten Überwachung eine kontinuierliche Zuglaufverfolgung und/oder Positionsermittlung durchgeführt wird.

3. Verfahren nach Anspruch 2,
**dadurch gekennzeichnet,**
**dass** die automatisierte Bedienung und Überwachung einheitlich mindestens eine der folgenden Funktionen verwirklicht:
• Ermittlung und Übertragung von Ankunftsinformationen der Schienenfahrzeuge (FZ),
• Betriebsführung mit dem Ziel einer Optimierung des Fahrplans.

4. Verfahren nach einem der voranstehenden Ansprüche,
**dadurch gekennzeichnet,**
**dass** in dem geteilten Betriebsbereich (GBB) Funktionskomponenten genutzt werden, die auch anderen Verkehrsteilnehmern als den Schienenfahrzeugen (FZ) zur Verfügung gestellt werden.

5. Verfahren nach einem der voranstehenden Ansprüche,
**dadurch gekennzeichnet,**
**dass** das Verfahren zur automatisierten Zugbeeinflussung auf CBTC beruht.

6. Verkehrsnetz zum Betreiben von Schienenfahrzeugen (FZ)
• sowohl mit einem für die Schienenfahrzeuge (FZ) reservierten Betriebsbereich (RBB)
• als auch mit einem mit anderen Verkehrsteilnehmern als den Schienenfahrzeugen (FZ) geteilten Betriebsbereich (GBB),
wobei in dem reservierten Betriebsbereich (RBB) ein rechnergestütztes, auf bidirektionale Kommunikation gestütztes Verfahren zur zentralen Zugüberwachung und Betriebsführung durchführbar ist,
**dadurch gekennzeichnet,**
**dass** das Verfahren zur automatisierten Zugüberwachung und Betriebsführung rechnergestützt auch in dem geteilten Betriebsbereich (GBB) durchführbar ist, wobei bei der Durchführung
• keine automatisierte Zugsicherung erfolgt,
• jedoch eine automatisierte Bedienung und Überwachung erfolgt.

7. Schienenfahrzeug (FZ) zum Betreiben in einem Verkehrsnetz
• sowohl mit einem für die Schienenfahrzeuge (FZ) reservierten Betriebsbereich (RBB)
• als auch mit einem mit anderen Verkehrsteilnehmern als den Schienenfahrzeugen (FZ) geteilten Betriebsbereich (GBB),
wobei in dem reservierten Betriebsbereich (RBB) ein rechnergestütztes, auf bidirektionale Kommunikation gestütztes Verfahren zur zentralen automatisierten Zugüberwachung und Betriebsführung durchführbar ist,
**dadurch gekennzeichnet,**
**dass** das Verfahren zur automatisierten Zugüberwachung und Betriebsführung rechnergestützt auch in dem geteilten Betriebsbereich (GBB) durchführbar ist, wobei bei der Durchführung
• keine automatisierte Zugsicherung erfolgt,
• jedoch eine automatisierte Bedienung und Überwachung erfolgt.

8. Computerprogramm mit Programmbefehlen zur Durchführung des Verfahrens nach einem der Ansprüche 1 - 5.

9. Bereitstellungsvorrichtung für das Computerprogramm nach dem letzten voranstehenden Anspruch, wobei die Bereitstellungsvorrichtung das Computerprogramm speichert und/oder bereitstellt.
